# FASCICULE DE BREVET EUROPEEN

(11) **EP 2 853 490 B1**
(45) Date de publication et mention de la délivrance du brevet: **17.02.2016**
(21) Numéro de dépôt: 14002982.8
(22) Date de dépôt: 29.08.2014
(51) Int. Cl.: B64C 27/14, B64D 35/00, F16F 7/02

(54) **Dispositif d'amortissement pour un arbre de transmission supercritique**
Dämpfungsvorrichtung für superkritische Drehwellen
Dampening device for a supercritical transmission shaft

(30) Priorité: 27.09.2013 FR 1302253
(43) Date de publication de la demande: 01.04.2015
(73) Titulaire: Airbus Helicopters, 13725 Marignane Cedex (FR)
(72) Inventeur: Nevers, Romain, F-13330 Pelissanne (FR); Aubertin, Ludovic, F-34250 Palavas Les Flots (FR); Marchand, François, F-13100 AIX EN Provence (FR)
(74) Mandataire: GPI & Associés

(56) Documents cités:
- EP-A1- 2 418 396
- EP-A2- 1 918 198
- FR-A1- 2 908 735
- FR-A1- 2 908 736
- US-A1- 2002 065 139

## Description

La présente invention se situe dans le domaine des moyens de transmission de puissance mécanique et plus particulièrement les moyens de transmission de puissance mécanique destinés à un aéronef à voilure tournante. Plus précisément, la présente invention concerne un dispositif d'amortissement pour un arbre de transmission supercritique de puissance mécanique. Ce dispositif d'amortissement permet principalement d'amortir les vibrations d'un arbre supercritique lors des passages à des vitesses de rotation critiques.

Un aéronef à voilure tournante comporte généralement au moins un rotor principal assurant la sustentation et la propulsion de l'aéronef ainsi qu'un rotor arrière assurant principalement une fonction anti-couple en lacet. Un tel aéronef comporte une installation motrice munie par exemple d'au moins un turbomoteur et entraînant mécaniquement une boîte de transmission principale de puissance. Cette boîte de transmission principale de puissance entraîne directement en rotation le rotor principal. Le rotor arrière est quant à lui entraîné en rotation par une chaîne de transmission de puissance arrière reliée en principe mécaniquement à la boîte de transmission principale de puissance.

Cette chaîne de transmission de puissance arrière comporte classiquement au moins deux arbres de transmission à partir de la boîte de transmission principale de puissance, par exemple un arbre de transmission avant et un arbre de transmission arrière, ainsi qu'une boîte de transmission auxiliaire de puissance reliant mécaniquement l'arbre de transmission arrière et le rotor arrière.

L'accouplement de ces deux arbres de transmission peut être soumis à plusieurs défauts qui sont principalement un désalignement angulaire, un désalignement radial et un écart axial entre ces arbres.

L'utilisation d'un accouplement flexible permet de compenser un tel défaut de désalignement angulaire. Un accouplement de type flexible, usuellement désigné par le terme « flector », est par exemple constitué d'un empilement de lames en acier. Par contre, un tel accouplement élastique est sans effet sur le désalignement radial et l'écart axial.

Ces arbres de transmission peuvent être également guidés en rotation par des paliers montés sur bagues élastiques permettant d'une part de compenser ces défauts et d'autre part d'amortir les vibrations et/ou les déformations de ces arbres de transmission. Ces paliers sont par exemple formés par des roulements à billes et des bagues élastiques en élastomère.

L'arbre de transmission arrière peut notamment être très long et nécessiter l'utilisation de plusieurs paliers intermédiaires. De fait, une telle chaîne de transmission de puissance arrière nécessite l'utilisation d'un grand nombre de pièces de liaison et de guidage qui peuvent engendrer un coût élevé et une masse importante. De plus, ces défauts, ces vibrations et ces déformations peuvent induire une dégradation rapide des paliers et/ou des bagues élastiques et, par suite, générer des opérations de maintenance fréquentes et coûteuses.

Afin de supprimer les paliers intermédiaires ainsi que les pièces de liaisons, il est possible d'utiliser un arbre de transmission long et souple. Cet arbre doit être capable de supporter des vitesses de rotation importantes imposées par l'entraînement du rotor arrière d'un aéronef à voilure tournante. Par exemple, un tel arbre de transmission peu atteindre des vitesses de rotation de l'ordre de 2000 tours par minute (2000 trs/min), voire 6000 trs/mn sur certains aéronefs, la longueur de cet arbre de transmission étant comprise entre 3 et 4 mètres (3 et 4m). Outre la suppression de pièces de liaison et de guidage, un tel arbre de transmission permet un gain de masse important, y compris sur la masse de l'arbre lui-même.

Par contre, pour de tels arbres de transmission, il existe des vitesses de rotation particulières générant des déformations importantes. En effet, pour de telles vitesses de rotation, les forces centrifuges résultant d'un déséquilibre de l'arbre provoquent des flèches progressivement croissantes de l'arbre, tant que ce phénomène n'est pas atténué. Les forces élastiques de rappel engendrées lorsque l'arbre se déforme sont inférieures aux forces centrifuges engendrées par l'arbre fléchi. Par suite, les flèches de l'arbre augmentent jusqu'à ce qu'elles soient éventuellement limitées par la structure physique entourant l'arbre de transmission ou bien par les caractéristiques de l'arbre lui-même.

De tels phénomènes peuvent apparaître dès que la vitesse de rotation de l'arbre engendre des vibrations proches de chaque fréquence propre de l'arbre. Ces phénomènes peuvent en fait apparaître dès que la vitesse de rotation de l'arbre est égale à une vitesse de rotation correspondant à chaque mode propre de vibration de l'arbre. De telles vitesses de rotation de l'arbre sont définies, prédéterminables et appelées « vitesses critiques ». On désigne généralement un tel arbre de transmission de puissance mécanique « arbre supercritique ».

Lors de telles déformations, l'arbre supercritique ayant une vitesse de rotation sensiblement égale à une vitesse critique comporte certains points de sa longueur qui ne subissent aucune flèche, c'est-à-dire qu'ils ne se déplacent pas transversalement. Ces points sont appelés « noeuds » ou « points nodaux ». A contrario, les points de l'arbre supercritique se déplaçant transversalement avec l'amplitude la plus importante constituent les « ventres » de cet arbre.

Afin de limiter les amplitudes de l'arbre supercritique lors du passage à des vitesses critiques, il est connu d'installer des dispositifs d'amortissement à l'emplacement de ces ventres ou bien à proximité de ces ventres. De tels dispositifs d'amortissement permettent, lorsque l'arbre supercritique ayant atteint une vitesse critique tend à s'écarter de son axe de rotation, d'une part de limiter la flèche de l'arbre et d'autre part de dissiper l'énergie de cette déformation. Ensuite, la déformation de l'arbre supercritique diminue au fur et à mesure que sa vitesse de rotation augmente, s'éloignant de fait de la vitesse critique.

Dès lors, l'arbre supercritique peut atteindre une vitesse de rotation sensiblement égale à une vitesse critique, ce passage devant être uniquement transitoire avant d'atteindre une vitesse nominale de rotation plus importante. On veille simplement à installer la vitesse de rotation nominale d'utilisation de l'arbre supercritique dans un intervalle de vitesse de rotation suffisamment éloigné de ses vitesses critiques correspondant à ses modes propres de vibration afin de ne pas risquer de générer de vibrations destructrices à long terme pour cet arbre supercritique.

Par exemple, si la vitesse de rotation nominale d'un arbre supercritique est située entre les vitesses critiques correspondant au premier et au deuxième modes propres de vibration de cet arbre, cet arbre rencontre une seule vitesse critique avant d'atteindre sa vitesse de rotation nominale. De même, si la vitesse de rotation nominale d'un arbre supercritique est située entre les vitesses critiques correspondant au troisième et au quatrième modes propres de vibration de cet arbre, cet arbre rencontre trois vitesses critiques avant d'atteindre sa vitesse de rotation nominale.

Dans un tel contexte, un type de dispositif d'amortissement connu comporte un support fixe et un disque munis respectivement d'une ouverture annulaire traversée par l'arbre supercritique. Des ressorts plaquent le disque contre le support, le disque étant mobile dans un plan perpendiculaire à l'axe de rotation de l'arbre.

Lors des passages aux vitesses critiques, l'arbre supercritique en se déformant vient au contact de l'ouverture annulaire du disque, le disque se déplaçant alors avec l'arbre qui continue de se déformer. Ce déplacement du disque permet, par l'intermédiaire des frottements entre le disque et le support générés par l'action des ressorts, de dissiper au moins une partie de l'énergie de la déformation de l'arbre. De plus, le dispositif d'amortissement permet également de limiter l'amplitude de déformation de l'arbre, le déplacement du disque étant limité.

Ensuite, les déformations de l'arbre supercritique diminuent et disparaissent au fur et à mesure que la vitesse rotation de l'arbre augmente, s'éloignant ainsi des vitesses critiques. Par suite, le disque se recentre dans le dispositif d'amortissement, entraîné par l'arbre qui se recentre autour de son axe de rotation.

Par contre, un défaut récurrent est rencontré avec ce type de dispositif d'amortissement. L'arbre supercritique est en rotation lorsqu'il vient en contact avec l'ouverture annulaire du disque. De fait, il induit par cette rotation un mouvement circulaire du disque qui, par suite, génère un décalage angulaire du disque vis-à-vis du support autour de l'axe de rotation de l'arbre critique.

Ce décalage angulaire persiste après que l'arbre supercritique se soit recentré autour de son axe de rotation, aucun élément de ce dispositif d'amortissement ne permettant d'annuler ce décalage angulaire du disque.

On connaît cependant le document EP2418396 qui décrit un tel dispositif d'amortissement comportant un mécanisme afin de recentrer totalement le disque. Ce mécanisme d'amortissement est complexe et comporte une pièce intermédiaire ainsi que quatre ressorts. Les quatre ressorts sont positionnés parallèlement entre eux et perpendiculairement à l'axe de rotation de l'arbre, deux ressorts étant positionnés entre le support et le disque et deux ressorts étant positionnés entre le support et la plaque intermédiaire.

En outre, le document FR1054332 décrit un montage de paliers pour un arbre tournant permettant d'une part de s'opposer aux oscillations et aux mouvements de rotation du montage autour de l'axe tournant et d'autre part d'autoriser des oscillations linéaires, circulaires ou elliptiques des paliers. Ces paliers comportent notamment des moyens élastiques situés dans deux plans différents, ces plans étant perpendiculaires l'un à l'autre.

De plus, on connait les documents FR2908735 et FR2908736 qui décrivent un dispositif d'amortissement magnétique pour un arbre de transmission de puissance équipant un hélicoptère. Ce dispositif comporte un palier magnétique amortissant les vibrations de l'arbre de transmission, ce palier magnétique étant fixé à la structure de l'hélicoptère par l'intermédiaire d'un amortisseur non magnétique. Cet amortisseur non magnétique permet de limiter les oscillations radiales de l'amortisseur magnétique et, par suite, celles de l'arbre. Le document US2002/065139 décrit également un dispositif d'amortissement magnétique.

Enfin, le document EP1919198, qui est considéré comme l'état de la technique plus proche, décrit un dispositif d'amortissement dans lequel un élément amortisseur est positionné entre deux plaques métalliques. Des ensembles de serrage composés d'une vis, d'un écrou et d'un ressort permettent de serrer ces plaques contre l'élément amortisseur.

La présente invention a alors pour objet un dispositif d'amortissement d'un arbre tournant supercritique qui soit à la fois simple, léger et peu coûteux tout en permettant d'amortir efficacement les déformations de l'arbre et de corriger le défaut de décalage angulaire dû à la rotation de l'arbre.

Selon l'invention, un dispositif d'amortissement pour un arbre en rotation par rapport à une structure autour d'un axe de rotation parallèle à une direction *A* comporte :
- un support apte à être solidarisé à la structure, ce support étant muni d'une première ouverture positionnée perpendiculairement à la direction *A*, et
- une plaque munie d'une seconde ouverture positionnée perpendiculairement à la direction *A*, l'arbre étant apte à traverser simultanément la première ouverture et la seconde ouverture avec respectivement un premier jeu radial *Jr1* avec le support et un second jeu radial *Jr2* avec la plaque.

Ce dispositif d'amortissement est remarquable en ce qu'il comporte également un plateau et un moyen de serrage. Le plateau est muni d'une troisième ouverture positionnée perpendiculairement à la direction *A*, l'arbre étant apte à traverser la troisième ouverture avec un troisième jeu radial *Jr3* avec le plateau. Le troisième jeu radial *Jr3* est inférieur au premier jeu radial *Jr1* et au second jeu radial *Jr2.*

Le plateau est positionné entre le support et la plaque et est mobile par rapport au support dans un plan perpendiculaire à la direction *A*. De plus, la plaque est fixe par rapport au support. Le moyen de serrage plaque selon une direction parallèle à la direction *A* la plaque contre le plateau et le plateau contre le support avec un effort de serrage.

De fait, le plateau peut se déplacer dans ce plan perpendiculaire à la direction *A* aussi bien en rotation autour de la direction *A* qu'en translation perpendiculairement à la direction *A.* De plus, le moyen de serrage génère, en plaquant la plaque contre le plateau et le plateau contre le support, des forces de friction lors des mouvements du plateau entre d'une part le plateau et la plaque et d'autre part le plateau et le support.

Ces forces de friction sont fonction de l'effort de serrage appliqué par le moyen de serrage et des matières constituant le plateau, la plaque et le support ainsi que des surfaces de contact ou de friction entre le plateau, la plaque et le support.

Avantageusement, le dispositif d'amortissement selon l'invention comporte des surfaces de friction importantes. En effet, cens surfaces de friction se composent d'une première surface de friction entre le plateau et la plaque et d'une seconde surface de friction entre le plateau et le support.

L'arbre est de préférence un arbre supercritique tel que défini précédemment. En outre, le support, fixé sur la structure, est donc fixe au contraire de l'arbre qui est en rotation autour de son axe de rotation. De plus, l'arbre peut se déformer, notamment lorsqu'il tourne à une vitesse de rotation sensiblement égale à une de ses vitesses critiques.

Ainsi, lors de telles déformations, l'arbre vient en contact avec le plateau, le troisième jeu radial *Jr3* étant inférieur au premier jeu radial *Jr1* et au second jeu radial *Jr2.* L'arbre continue de se déformer entraînant le déplacement du plateau. Les forces de friction apparaissant entre d'une part le plateau et la plaque et d'autre part le plateau et le support lors des mouvements du plateau permettent alors d'amortir ces déformations de l'arbre.

Le troisième jeu radial *Jr3* est par exemple compris entre 1 et 8 millimètres (1 et 8mm). De préférence, ce jeu radial *Jr3* est compris entre 2 et 5mm.

Ensuite, l'arbre peut continuer de se déformer jusqu'à être en butée dans le dispositif d'amortissement selon l'invention si l'énergie entraînant sa déformation n'a pas été entièrement dissipée. Cette butée peut être constituée par l'arbre venant en appui contre la première ouverture du support et/ou la seconde ouverture de la plaque. Cette butée peut également être constituée par le plateau venant en appui dans un logement du dispositif d'amortissement. Ce logement peut être formé dans le support seul ou bien dans la plaque seule. Ce logement peut aussi être formé conjointement par le support et la plaque.

De plus, le plateau peut également être entraîné en rotation par l'arbre dès que l'arbre est en contact avec le plateau. Avantageusement, le mouvement de rotation possible du plateau permet alors d'éviter l'apparition du phénomène de décalage angulaire du disque par rapport à son support sur un dispositif d'amortissement connu comme évoqué précédemment.

Afin que le dispositif d'amortissement selon l'invention ait un comportement équivalent dans toutes les directions, le plateau est de préférence circulaire et la troisième ouverture est également circulaire. De même, la première et la seconde ouverture sont circulaires. Ce plateau se positionne dans un logement circulaire, un quatrième jeu radial *Jr4* étant présent radialement entre le plateau et le logement. Par suite, si ce quatrième jeu radial *Jr4* est supérieur au premier jeu *Jr1* et au second jeu *Jr2,* la butée de déformation de l'arbre est constituée par l'arbre venant en appui contre la première ouverture du support et/ou la seconde ouverture de la plaque. De préférence, le quatrième jeu radial *Jr4* est inférieur au premier jeu *Jr1* et au second jeu *Jr2,* la butée étant alors constituée par le plateau venant en appui dans le logement.

Le support et la plaque sont par exemple métalliques, en acier ou bien en aluminium alors que le plateau est réalisé dans un matériau présentant notamment des propriétés importantes de résistance à l'usure et aux hautes températures. En effet, le plateau se déplace en étant plaqué contre la plaque et le support par le moyen de serrage, générant alors une augmentation importante de la température du plateau, du support et de la plaque suite aux frottements entre ces composants.

De préférence, le plateau est en Torlon^{®}. Le Torlon^{®} est un matériau de la famille des matériaux thermoplastiques et plus particulièrement un polyamide-imide. Le Torlon^{®} possède des propriétés importantes lui permettant de remplacer des métaux dans des conditions sévères, notamment à des températures pouvant aller au-delà de 250°C.

En outre, le moyen de serrage permet, en plaquant la plaque contre le plateau et le plateau contre le support selon une direction parallèle à la direction A, de générer des forces de friction lors des mouvements du plateau et, par suite, d'amortir les déformations de l'arbre. Ce moyen de serrage permet donc d'appliquer un effort de serrage entre la plaque, le support et le plateau qui est important, voire primordial pour l'efficacité du dispositif d'amortissement selon l'invention. De plus, ce moyen de serrage peut également permettre de positionner et de fixer la plaque sur le support limitant ainsi le nombre de composants.

Ce moyen de serrage est par exemple formé par plusieurs vis permettant d'exercer cet effort de serrage lors de leur vissage.

Par contre, lors du fonctionnement de ce dispositif d'amortissement, une usure du plateau, de la plaque et/ou du support peut apparaître. Par suite, cet effort de serrage peut diminuer en fonction de cette usure réduisant de fait les forces de friction entre le plateau, la plaque et le support et, par suite, l'efficacité du dispositif d'amortissement selon l'invention.

Le moyen de serrage comporte de préférence au moins un moyen déformable élastique afin de compenser cette usure éventuelle du plateau, de la plaque et/ou du support. De fait, un effort de serrage est appliqué en permanence entre le plateau, la plaque et le support. Par exemple, le moyen de serrage comporte un ou plusieurs ressorts.

Dans un mode préféré de l'invention, le moyen de serrage est formé de trois sous-ensembles répartis régulièrement autour des première et seconde ouvertures afin que l'effort de serrage soit appliqué uniformément sur les surfaces de friction entre le plateau, la plaque et le support. Chaque sous-ensemble comporte un ressort de compression permettant d'appliquer l'effort de serrage par l'intermédiaire par exemple d'une vis et d'un écrou.

De préférence, le moyen de serrage est réglable afin par exemple d'adapter l'effort de serrage pour optimiser le fonctionnement du dispositif d'amortissement selon l'invention. Le réglage du moyen de serrage permet également de compenser l'usure éventuelle du plateau, de la plaque et/ou du support lorsqu'elle devient trop importante. Ainsi un effort de serrage suffisant est assuré malgré cette usure, permettant d'avoir des forces de friction suffisantes pour amortir les déformations de l'arbre.

Par ailleurs, lorsque la vitesse de rotation de l'arbre s'éloigne d'une de ses vitesses critiques, l'arbre se recentre autour de son axe de rotation. Le plateau revient alors également à une position centrée autour de cet axe de rotation de l'arbre, entraîné à cette position par l'arbre.

Eventuellement, une variante de ce dispositif d'amortissement comporte un moyen de centrage élastique afin de faciliter le recentrage du plateau. Ce moyen de centrage élastique permet d'exercer une force de rappel radiale du plateau vers l'axe de rotation de l'arbre permettant ainsi de contrer les forces de friction lors des mouvements du plateau et éviter ainsi que ces forces de friction ne s'opposent au recentrage du plateau et, par suite, à celui de l'arbre.

Avantageusement, ce moyen de centrage élastique s'oppose également aux déformations de l'arbre notamment lorsque sa vitesse de rotation est sensiblement égale à une de ses vitesses critiques, le plateau venant alors s'appuyer contre ce moyen de centrage élastique et, par suite, le déformer. En conséquence, ce moyen de centrage élastique s'oppose alors à ce déplacement du plateau et, par suite, aux déformations de l'arbre, participant ainsi également à l'amortissement de ces déformations de l'arbre.

Ce moyen de centrage élastique est de préférence positionné entre le plateau et son logement dans le dispositif d'amortissement selon l'invention. Ainsi, ce moyen de centrage élastique est positionné entre d'une part le plateau et d'autre part la plaque et/ou le support. Ce moyen de centrage élastique est par exemple une couronne de rappel élastique positionnée radialement autour du plateau. Ce moyen de centrage élastique peut être positionné au contact du plateau ou bien un cinquième jeu radial *Jr5* est présent entre le plateau et le moyen de centrage élastique.

Ainsi, le dispositif d'amortissement selon l'invention permet d'amortir efficacement et simplement les déformations de l'arbre lorsqu'il est en rotation à une vitesse sensiblement égale à une de ses vitesses critiques. En effet, ce dispositif d'amortissement est composé de trois composants principaux hors le moyen de serrage. De plus, ce dispositif d'amortissement ne comporte qu'un seul composant mobile, le plateau. Par suite, la masse du dispositif d'amortissement selon l'invention est faible. De plus, la simplicité de ce dispositif d'amortissement permet de réduire les fréquences de maintenance et simplifier également les opérations de maintenance.

De plus, la structure sur laquelle est fixée le support peut être soumise à des contraintes mécaniques et/ou des vibrations qui sont transmises à l'arbre et peuvent être potentiellement dangereuses pour la tenue mécanique de l'arbre. Avantageusement, outre les déformations de l'arbre lorsqu'il est en rotation à une vitesse sensiblement égale à une de ses vitesses critiques, le dispositif d'amortissement selon l'invention permet avantageusement d'amortir en tout ou en partie ces contraintes et/ou ces vibrations.

La présente invention a aussi pour objet un système de transmission mécanique comportant :
- une structure,
- un arbre en rotation autour d'un axe de rotation parallèle à une direction A par rapport à la structure,
- au moins deux paliers fixés à la structure et guidant en rotation l'arbre autour de cet axe de rotation, et
- au moins un dispositif d'amortissement comme précédemment décrit fixé à la structure.

L'arbre de ce système de transmission mécanique est un arbre supercritique. Chaque dispositif d'amortissement permet d'amortir les déformations de l'arbre et de limiter leurs amplitudes Chaque dispositif d'amortissement est de préférence positionné au niveau d'un point où l'amplitude des déformations est parmi les plus importantes de l'arbre ou bien à proximité d'un tel point.

Ce système de transmission mécanique est particulièrement adapté à l'entraînement en rotation d'un rotor arrière d'un aéronef à voilure tournante, L'arbre permet ainsi de transmettre une puissance mécanique d'une boîte de transmission principale de puissance, entraînée par une installation motrice de l'aéronef, vers une boîte de transmission auxiliaire de puissance entraînant le rotor arrière en rotation.

La structure du système de transmission mécanique peut alors être constituée par une poutre de queue de l'aéronef à voilure tournante. De plus, l'arbre est alors d'une longueur importante de l'ordre de 3 à 4 m. Il est alors intéressant que cet arbre soit un arbre supercritique afin d'une part de réduire sa masse et d'autre part de réduire les nombre de paliers assurant son guidage en rotation. Par exemple, la masse d'un tel arbre supercritique d'une longueur de 3.5m peut avoir une masse inférieure à 5 kilogrammes (5kg).

De plus, outre les déformations de l'arbre lorsqu'il est en rotation à une vitesse sensiblement égale à une de ses vitesses critiques, le dispositif d'amortissement permet avantageusement d'amortir en tout ou en partie des vibrations transmises à l'arbre par la poutre de queue. En effet, la poutre de queue de cet aéronef est soumise durant un vol à de fortes contraintes aérodynamiques et à des vibrations dues au mouvement du rotor principal de l'aéronef qui la déforment en permanence. Ces contraintes extérieures se répercutent par conséquent sur l'arbre en rotation et génèrent également des vibrations potentiellement dangereuses.

Par ailleurs, le support du dispositif d'amortissement peu être fixé sur cette poutre de queue. Ce support peut également être partie intégrante de la poutre de queue tout en servant par exemple de support au fuselage de la poutre afin de réduire le nombre de composants et, par suite, la masse de l'aéronef.

L'invention et ses avantages apparaîtront avec plus de détails dans le cadre de la description qui suit avec des exemples de réalisations donnés à titre illustratif en référence aux figures annexées qui représentent :
- la figure 1, une vue d'un système de transmission mécanique,
- les figures 2 et 3, une vue des déformations d'un arbre supercritique,
- la figure 4, une vue en perspective d'un dispositif d'amortissement,
- la figure 5, une vue éclatée de ce dispositif d'amortissement,
- la figure 6, une vue en coupe de ce dispositif d'amortissement, et
- la figure 7, une vue en coupe d'une variante de ce dispositif d'amortissement.

Les éléments présents dans plusieurs figures distinctes sont affectés d'une seule et même référence.

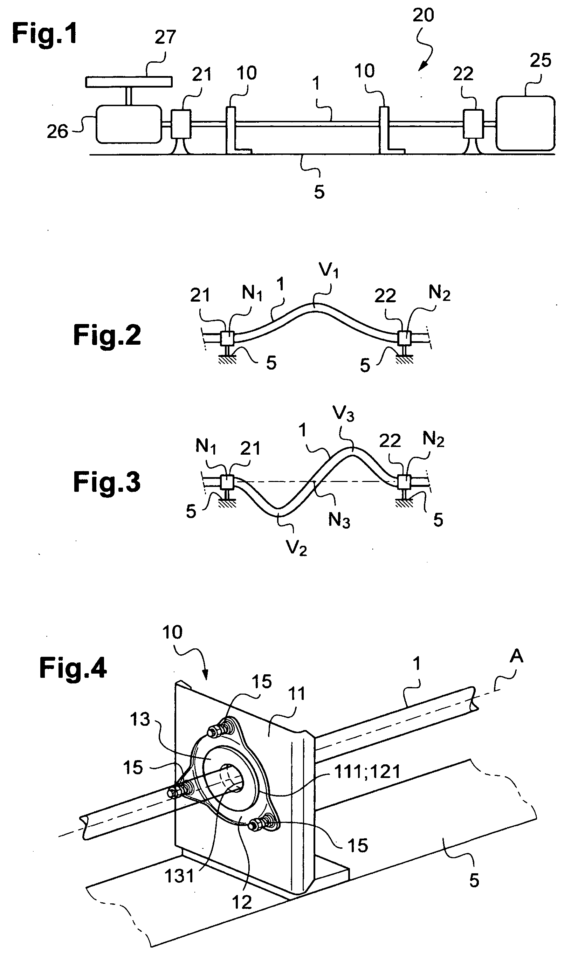

La figure 1 présente un système de transmission mécanique 20 entraînant en rotation un rotor 27 par l'intermédiaire d'une boîte de transmission auxiliaire de puissance 26. Le rotor 27 est par exemple un rotor arrière d'un aéronef à voilure tournante. Ce système de transmission mécanique 20 comporte un arbre 1 en rotation autour d'un axe de rotation parallèle à une direction A par rapport à une structure 5 fixe ainsi que deux paliers 21,22 fixés à la structure 5 et deux dispositifs d'amortissement 10 également fixés à la structure 5. Cet arbre 1 est entraîné en rotation par une boîte de transmission principale de puissance 25. Cet arbre 1 a par exemple une longueur importante, de l'ordre de 3 à 4 m, sa vitesse de rotation pouvant être de l'ordre de 2000 trs/mn, voire 6000 trs/mn, par exemple.

Cet arbre 1 peut être un arbre supercritique. Il peut donc être amené à se déformer de façon importante lorsque sa vitesse de rotation est sensiblement égale à une de ses vitesses critiques. De telles déformations sont schématisées sur les figures 2 et 3.

La figure 2 représente plus particulièrement un arbre supercritique dont la vitesse de rotation est proche de la vitesse critique correspondant à son premier mode propre de vibration. Cet arbre supercritique déformé comporte deux noeuds *N₁,N₂* au niveau des deux paliers 21,22 et un seul ventre *V₁*. Par contre, la figure 3 représente un arbre supercritique dont la vitesse de rotation est proche de la vitesse critique correspondant à son deuxième mode propre de vibration. Dans ce cas, l'arbre supercritique déformé comporte trois noeuds *N₁,N₂,N₃* et deux ventres *V₂,V₃.*

On constate donc que la position des ventres *V₁,V₂,V₃,* qui correspondent aux points dont l'amplitude de déformation est la plus importante, et des noeuds *N₁,N₂,N₃,* qui correspondent aux points ne se déformant pas, varie suivant la vitesse critique atteinte et chaque mode propre de vibration de l'arbre 1 supercritique correspondant.

Afin d'amortir ces déformations et de limiter leurs amplitudes, les deux dispositifs d'amortissement 10 sont positionnés de préférence à des points particuliers prédéterminés le long de l'arbre 1 supercritique.

Par exemple, si la vitesse de rotation nominale de l'arbre 1 est située entre les vitesses critiques correspondant au premier et au deuxième modes propres de vibration de cet arbre 1, un seul dispositif d'amortissement 10 est nécessaire et positionné au niveau du ventre *V₁* du premier mode propre de vibration de l'arbre 1.

De même, si la vitesse de rotation nominale d'un arbre 1 est située entre les vitesses critiques correspondant au deuxième et au troisième modes propres de vibration de cet arbre 1, trois dispositifs d'amortissement 10 permettent d'amortir les déformations et les vibrations générées lorsque la vitesse de rotation de l'arbre 1 est proche des vitesses critiques correspondant au premier et au deuxième modes propres de vibration de cet arbre 1. Ces trois dispositifs d'amortissement 10 sont positionnés au niveau des ventres *V₁,V₂,Y₃* de ce premier et ce deuxième mode propre de vibration de l'arbre 1.

Cependant, deux dispositifs d'amortissement 10 comme représenté sur la figure 1 sont suffisants pour permettre d'amortir efficacement ces déformations et ces vibrations. Ces deux dispositifs d'amortissement 10 sont alors positionnés à proximité des ventres *Y₁,Y₂,V₃* de ce premier et ce deuxième mode propre de vibration de l'arbre 1. Par exemple, un premier dispositif d'amortissement 10 est positionné entre le ventre *V₁* du premier mode propre de vibration de l'arbre 1 et un premier ventre *V₂* du deuxième mode propre alors que le second dispositif d'amortissement 10 est positionné entre le ventre *V₁* du premier mode propre de vibration de l'arbre 1 et un second ventre *V₃* du deuxième mode propre.

Les figures 4 à 6 présentent plus précisément un tel dispositif d'amortissement 10. Ce dispositif d'amortissement 10 comporte un support 11 fixé à la structure 5, une plaque 12, un plateau 13 et un moyen de serrage 15.

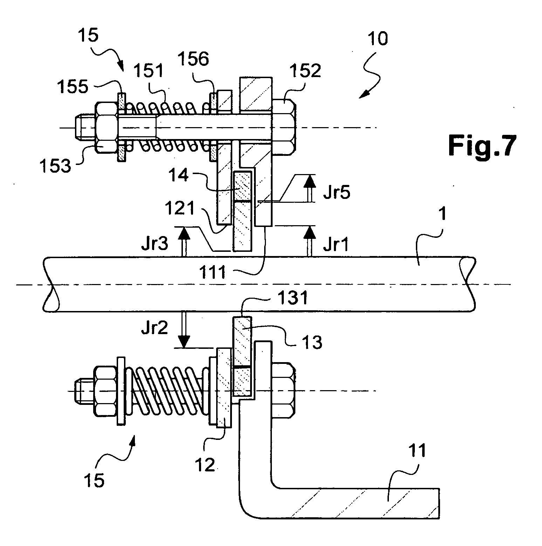

Le support 11 et la plaque 12 sont munis respectivement d'une première ouverture 111 et d'une seconde ouverture 121 circulaires et positionnées perpendiculairement à la direction A. L'arbre 1 traverse simultanément la première ouverture 111 et la seconde ouverture 121 avec respectivement un premier jeu radial *Jr1* avec le support 11 et un second jeu radial *Jr2* avec la plaque 12, comme représenté sur la figure 7. Le support 11 possède un logement 113 de forme circulaire. La plaque 12 est fixée au support 11 par l'intermédiaire du moyen de serrage 15 de manière à recouvrir le logement 113. De plus, la plaque 12 ne possède aucun degré de liberté vis-à-vis du support 11.

Le moyen de serrage 15 comporte trois sous-ensembles répartis régulièrement autour des première et seconde ouvertures 111,121, de telle sorte que les sous-ensembles forment des angles de 120° avec le centre de rotation des première et seconde ouvertures 111,121. De fait, le moyen de serrage 15 applique un effort de serrage uniforme sur la plaque 12 permettant notamment de fixer cette plaque 12 sur le support 11.

Chaque sous-ensemble comporte un ressort de compression 151, une vis 152, un écrou 153 et deux rondelles 155,156. L'utilisation d'un moyen déformable élastique tel que le ressort de compression 151 permet de pouvoir ajuster, par l'intermédiaire de cette vis 152 et de cet écrou 153, la compression de ce ressort de compression 151 afin de régler l'effort de serrage.

Le plateau 13 est de forme circulaire et muni d'une troisième ouverture 131 circulaire en son centre, positionnée perpendiculairement à la direction *A*. L'arbre 1 traverse cette troisième ouverture 131 avec un troisième jeu radial *Jr3* avec le plateau. Le troisième jeu radial *Jr3* est inférieur au premier jeu radial *Jr1* et au second jeu radial *Jr2.* Le troisième jeu radial *Jr3* est par exemple compris entre 1 et 8mm.Le support et la plaque sont métalliques, par exemple en acier ou bien en aluminium alors que le plateau est réalisé en Torlon^{®}.

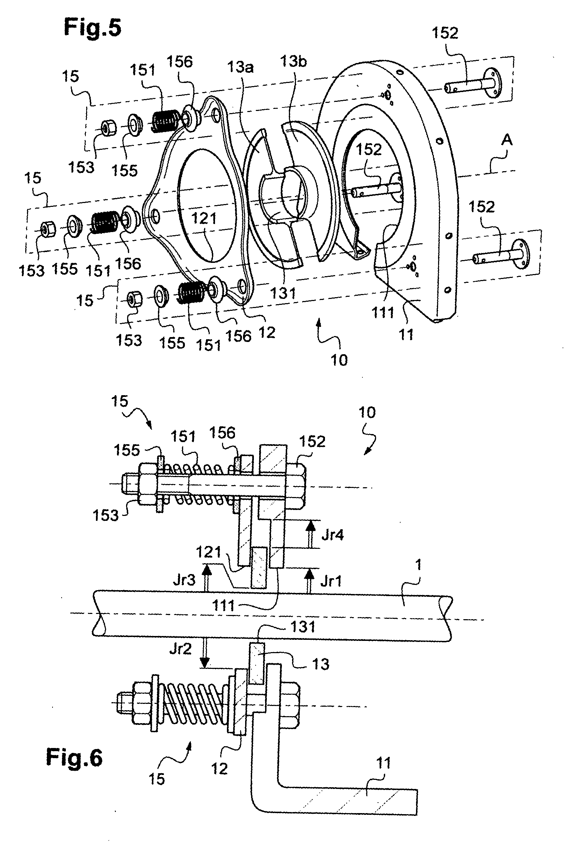

Le plateau 13 est positionné dans le logement 113 du support 11 avec un quatrième jeu radial *Jr4* comme représenté sur la figure 6, la plaque 12 étant fixée au support 11 de manière à être en appui contre le plateau 13. Le plateau 13 peut ainsi se déplacer dans un plan perpendiculaire à la direction *A* par rapport au support 11. Cependant, le moyen de serrage 15 plaque la plaque contre le plateau et le plateau contre le support selon la direction *A* avec l'effort de serrage.

De fait, tout déplacement du plateau 13, que ce soit une rotation autour de la direction *A* ou bien une translation dans le plan perpendiculaire à la direction *A*, génère des forces de friction entre d'une part le plateau 13 et la plaque 12 et d'autre part le plateau 13 et le support 11.

De tels déplacements du plateau 13 se produisent lors de déformations de l'arbre 1 lorsqu'il tourne à une vitesse de rotation sensiblement égale à une de ses vitesses critiques. En effet, suite à ces déformations, l'arbre 1 vient en contact avec le plateau 13 et entraîne son déplacement. Le plateau 13 peut alors se déplacer en translation dans un plan perpendiculaire à la direction *A* et en rotation autour de cette direction *A*. Le plateau 13 étant en contact avec la plaque 12 et le support 11 sous l'effort de serrage appliqué par le moyen de serrage 15, les forces de friction qui apparaissent permettent d'amortir les déformations de l'arbre 1.

Ces forces de friction sont directement liées à l'effort de serrage appliqué par le moyen de serrage 15 aux surfaces de contact ou de friction entre le plateau 13, la plaque 12 et le support 1 ainsi qu'aux matières constituant le plateau 13, la plaque 12 et le support 11.

De plus, le moyen de serrage 15 est réglable, ce qui permet d'ajuster l'effort de serrage et, par suite, les forces de friction lors des mouvements du plateau 13. De fait, le moyen de serrage 15 permet de régler le taux d'amortissement des déformations de l'arbre 1.

En outre, lors du fonctionnement de ce dispositif d'amortissement 10, une usure du plateau 13, de la plaque 12 et/ou du support 11 peut apparaître. La présence des ressorts de compression 151 dans le moyen de serrage 15 permet de compenser cette usure et de conserver un effort de serrage suffisant afin d'amortir les déformations de l'arbre 1.

En outre, afin de faciliter le remplacement de ce plateau 13 par exemple lorsque son usure le nécessite, ce plateau 13 peut être formé par deux demi-plateaux 13a,13b comme représenté sur la figure 5. Ces deux demi-plateaux 13a,13b peuvent ainsi être remplacés sans démontage complet de l'arbre 1.

Par ailleurs, lorsque la vitesse de rotation de l'arbre 1 s'éloigne d'une de ses vitesses critiques, l'arbre 1 se recentre autour de son axe de rotation. Le plateau 13 revient alors également à une position centrée autour de cet axe de rotation, entraîné à cette position par l'arbre 1.

Avantageusement, aucun décalage angulaire du plateau 13 vis-à-vis du support 11 n'apparaît dans le dispositif d'amortissement 10.

La figure 7 représente une variante d'un dispositif d'amortissement 10 selon l'invention qui comporte un moyen de centrage élastique 14, telle une couronne de rappel élastique de forme annulaire, positionnée autour du plateau 13, dans le logement 113 du support 11.

Ce moyen de centrage élastique 14 permet de faciliter le recentrage du plateau 13 en exerçant une force de rappel radiale du plateau 13 vers l'axe de rotation de l'arbre 1. En effet, les forces de friction peuvent s'opposer à un retour du plateau 13 à une position centrée exactement autour l'axe de rotation de l'arbre 1. Ce moyen de centrage élastique 14 permet ainsi de contrer ces forces de friction.

Avantageusement, ce moyen de centrage élastique 14 s'oppose également aux déformations de l'arbre 1 et participe ainsi à l'amortissement des déformations de l'arbre 1.

Le moyen de centrage élastique 14 peut être positionné avec un cinquième jeu radial *Jr5* par rapport au plateau 13 ou bien être en contact avec le plateau 13. Le cinquième jeu radial *Jr5* est alors nul.

Le cinquième jeu radial *Jr5* est par exemple nul lorsque les amplitudes de déformation de l'arbre 1 restent faibles. Par contre, si ces amplitudes de déformation sont plus importantes, un cinquième jeu radial *Jr5* peut être pris en compte pour éviter la dégradation du moyen de centrage élastique 14 lors de ces déformations importantes de l'arbre 1.

Par exemple, de faibles déformations de l'arbre 1 sont de l'ordre de 3mm et des déformations importantes sont de l'ordre de 6mm.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'amortissement (10) pour un arbre (1) en rotation autour d'un axe de rotation parallèle à une direction (A) par rapport à une structure (5), ledit dispositif d'amortissement (10) comportant :
- un support (11) apte à être solidarisé à ladite structure (5), ledit support (11) étant muni d'une première ouverture (111) positionnée perpendiculairement à ladite direction (A), et
- une plaque (12) munie d'une seconde ouverture (121) positionnée perpendiculairement à ladite direction (A), ledit arbre (1) étant apte à traverser simultanément ladite première ouverture (111) et ladite seconde ouverture (121) avec respectivement un premier jeu radial (Jr1) avec ledit support (11) et un second jeu radial (Jr2) avec ladite plaque (12),
- un plateau (13) muni d'une troisième ouverture (131) positionnée perpendiculairement à ladite direction (A), ledit plateau (13) étant positionné entre ledit support (11) et ladite plaque (12) et étant mobile par rapport audit support (11) dans un plan perpendiculaire à ladite direction (A), ledit arbre (1) étant apte à traverser ladite troisième ouverture (131) avec un troisième jeu radial (Jr3) avec ledit plateau (13), ledit troisième jeu radial (Jr3) étant inférieur audit premier jeu radial (Jr1) et audit second jeu radial (Jr2), et
- un moyen de serrage (15) plaquant parallèlement à ladite direction (A) ladite plaque (12) contre ledit plateau (13) et ledit plateau (13) contre ledit support (11)
**caractérisé en ce que** ledit dispositif d'amortissement (10) comporte un moyen de centrage élastique (14) positionné radialement autour dudit plateau (13).

2. Dispositif d'amortissement (10) selon la revendication 1,
**caractérisé en ce que** ledit troisième jeu radial (Jr3) est compris entre 1 et 8mm.

3. Dispositif d'amortissement (10) selon l'une quelconque des revendications 1 à 2,
**caractérisé en ce que** ledit moyen de serrage (15) comporte au moins un moyen déformable élastique (151).

4. Dispositif d'amortissement (10) selon la revendication 3,
**caractérisé en ce que** ledit moyen de serrage (15) comporte trois ressorts de compression (151).

5. Dispositif d'amortissement (10) selon l'une quelconque des revendications 1 à 4,
**caractérisé en ce que** ledit plateau (13) est en Torlon^{®}.

6. Dispositif d'amortissement (10) selon l'une quelconque des revendications 1 à 5,
**caractérisé en ce que** ledit support (11) et ladite plaque (12) sont métalliques.

7. Dispositif d'amortissement (10) selon la revendication 6,
**caractérisé en ce que** ledit support (11) et ladite plaque (12) sont en aluminium.

8. Dispositif d'amortissement (10) selon la revendication 6, **caractérisé en ce que** ledit support (11) et ladite plaque (12) sont en acier.

9. Dispositif d'amortissement (10) selon l'une quelconque des revendications 1 à 8,
**caractérisé en ce que** ledit moyen de centrage élastique (14) est positionné entre ledit plateau (13) et ladite plaque (12).

10. Dispositif d'amortissement (10) selon l'une quelconque des revendications 1 à 8,
**caractérisé en ce que** ledit moyen de centrage élastique (14) est positionné entre ledit plateau (13) et ledit support (11).

11. Dispositif d'amortissement (10) selon l'une quelconque des revendications 1 à 10,
**caractérisé en ce que** ledit moyen de centrage élastique (14) est une couronne de rappel élastique positionnée radialement autour dudit plateau (13).

12. Dispositif d'amortissement (10) selon l'une quelconque des revendications 1 à 11,
**caractérisé en ce que** ledit dispositif d'amortissement (10) est adapté à un arbre supercritique (1).

13. Système de transmission mécanique (20) comportant :
- une structure (5),
- un arbre (1) en rotation autour d'un axe de rotation parallèle à une direction (A) par rapport à ladite structure (5),
- au moins deux paliers (21,22) fixés à ladite structure (5) et guidant en rotation ledit arbre (1),
**caractérisé en ce que** ledit système de transmission mécanique (20) comporte au moins un dispositif d'amortissement (10) selon l'une quelconque des revendications 1 à 12.

14. Système de transmission mécanique (20) selon la revendication 13,
**caractérisé en ce que** ledit arbre (1) est un arbre supercritique.

15. Système de transmission mécanique (20) selon l'une quelconque des revendications 13 à 14,
**caractérisé en ce que** ladite structure (5) est une poutre de queue (51) d'un aéronef (50) à voilure tournante, ledit arbre (1) étant un arbre de transmission entraînant en rotation un rotor arrière (52) dudit aéronef (50).

## Patentansprüche

1. Dämpfungsvorrichtung (10) für eine sich um eine Drehachse drehende Welle (1), die parallel zu einer Richtung (A) relativ zu einem Aufbau (5) verläuft, wobei die Dämpfungsvorrichtung (10) aufweist:
- einen Träger (11), der an dem Aufbau (5) befestigt werden kann, wobei der Träger (11) mit einer ersten Öffnung (111) versehen ist, die senkrecht zu der Richtung (A) positioniert ist, und
- eine Platte (12) mit einer zweiten Öffnung (121), die senkrecht zu der Richtung (A) positioniert ist, wobei die Welle (1) gleichzeitig die erste Öffnung (111) und die zweite Öffnung (121) durchqueren kann mit jeweils einem ersten Radialspiel (Jr1) mit dem Träger (11) und einem zweiten Radialspiel (Jr2) mit der Platte (12),
- eine Scheibe (13) mit einer dritten Öffnung (131), die senkrecht zu der Richtung (A) positioniert ist, wobei die Scheibe (13) zwischen dem Träger (11) und der Platte (12) angeordnet ist und bezüglich des Trägers (11) in einer Ebene senkrecht zu der Richtung (A) beweglich ist, wobei die Welle (1) die dritte Öffnung (131) mit einem dritten Radialspiel (Jr3) mit der Scheibe (13) durchqueren kann, wobei das dritte Radialspiel (Jr3) kleiner ist als das erste Radialspiel (Jr1) und das zweite Radialspiel (Jr2), und
- ein Spannmittel (15), das die Platte (12) parallel zu der Richtung (A) gegen die Scheibe (13), und die Scheibe (13) gegen den Träger (11) andrückt,
**dadurch gekennzeichnet, dass** die Dämpfungsvorrichtung (10) ein elastisches Zentriermittel (14) aufweist, das radial um die Scheibe (13) positioniert ist.

2. Dämpfungsvorrichtung (10) nach Anspruch 1,
**dadurch gekennzeichnet, dass** das dritte Radialspiel (Jr3) zwischen 1 und 8 mm beträgt.

3. Dämpfungsvorrichtung (10) nach einem der Ansprüche 1 bis 2,
**dadurch gekennzeichnet, dass** das Spannmittel (15) mindestens ein elastisch verformbares Mittel (151) aufweist.

4. Dämpfungsvorrichtung (10) nach Anspruch 3,
**dadurch gekennzeichnet, dass** das Spannmittel (15) drei Druckfedern (151) aufweist.

5. Dämpfungsvorrichtung (10) nach einem der Ansprüche 1 bis 4,
**dadurch gekennzeichnet, dass** die Scheibe (13) aus Torlon^{®} gefertigt ist.

6. Dämpfungsvorrichtung (10) nach einem der Ansprüche 1 bis 5,
**dadurch gekennzeichnet, dass** der Träger (11) und die Platte (12) aus Metall sind.

7. Dämpfungsvorrichtung (10) nach Anspruch 6,
**dadurch gekennzeichnet, dass** der Träger (11) und die Platte (12) aus Aluminium sind.

8. Dämpfungsvorrichtung (10) nach Anspruch 6,
**dadurch gekennzeichnet, dass** der Träger (11) und die Platte (12) aus Stahl sind.

9. Dämpfungsvorrichtung (10) nach einem der Ansprüche 1 bis 8,
dadurch gekenntzeichnet, dass das elastische Zentriermittel (14) zwischen der Scheibe (13) und der Platte (12) angeordnet ist.

10. Dämpfungsvorrichtung (10) nach einem der Ansprüche 1 bis 8,
**dadurch gekennzeichnet, dass** das elastische Zentriermittel (14) zwischen der Scheibe (13) und dem Träger (11) angeordnet ist.

11. Dämpfungsvorrichtung (10) nach einem der Ansprüche 1 bis 10,
**dadurch gekennzeichnet, dass** das elastische Zentriermittel (14) ein elastischer Federkranz ist, der radial um die Scheibe (13) herum positioniert ist.

12. Dämpfungsvorrichtung (10) nach einem der Ansprüche 1 bis 11,
**dadurch gekennzeichnet, dass** die Dämpfungsvorrichtung (10) an eine superkritische Welle (1) angepasst ist.

13. Mechanisches Getriebesystem (20) mit:
- einem Aufbau (5),
- einer Welle (1), die sich um eine Drehachse dreht, die parallel zu einer Richtung (A) bezüglich des Aufbaus (5) ist,
- mindestens zwei Lagern (21, 22), die an dem Aufbau (5) befestigt sind und die Welle (1) drehlagern,
**dadurch gekennzeichnet, dass** das mechanische Getriebesystem (20) mindestens eine Dämpfungsvorrichtung (10) nach einem der Ansprüche 1 bis 12 aufweist.

14. Mechanisches Getriebesystem (20) nach Anspruch 13,
**dadurch gekennzeichnet, dass** die Welle (1) eine superkritische Welle ist.

15. Mechanisches Getriebesystem (20) nach einem der Ansprüche 13 bis 14,
**dadurch gekennzeichnet, dass** der Aufbau (5) ein Heckausleger (51) eines Drehflügel-Luftfahrzeugs (50) ist, wobei die Welle (1) eine Antriebswelle ist, die einen Heckrotor (52) des Luftfahrzeugs (50) zu einer Drehbewegung antreibt.

## Claims

1. A damping device (10) for a shaft (1) rotating about an axis of rotation parallel to a direction (A) relative to a structure (5), said damping device (10) comprising:
- a support (11) suitable for being secured to said structure (5), said support (11) being provided with a first opening (111) positioned perpendicular to said direction (A), and
- a plate (12) provided with a second opening (121) positioned perpendicular to said direction (A), said shaft (1) being suitable for passing simultaneously through said first opening (111) and said second opening (121) with a first radial clearance (Jr1) with said support (11) and a second radial clearance (Jr2) with said plate (12), respectively,
- a disc (13) provided with a third opening (131) positioned perpendicular to said direction (A), said disc (13) being positioned between said support (11) and said plate (12) and being mobile relative to said support (11) in a plane perpendicular to said direction (A), said shaft (1) being suitable for passing through said third opening (131) with a third radial clearance (Jr3) with said disc (13), said third radial clearance (Jr3) being less than said first radial clearance (Jr1) and than said second radial clearance (Jr2), and
- a clamping means (15), parallel to said direction (A), flattening said plate (12) against said disc (13) and said disc (13) against said support (11),
**characterised in that** said damping device (10) comprises an elastic centring means (14) positioned radially about said disc (13).

2. A damping device (10) according to Claim 1,
**characterised in that** said third radial clearance (Jr3) is of between 1 and 8 mm.

3. A damping device (10) according to any one of Claims 1 to 2,
**characterised in that** said clamping means (15) comprises at least one elastic deformable means (151).

4. A damping device (10) according to Claim 3,
**characterised in that** said clamping means (15) comprises three compression springs (151).

5. A damping device (10) according to any one of Claims 1 to 4,
**characterised in that** said disc (13) is made of Torlon®.

6. A damping device (10) according to any one of Claims 1 to 5,
**characterised in that** said support (11) and said plate (12) are metallic.

7. A damping device (10) according to Claim 6,
**characterised in that** said support (11) and said plate (12) are made of aluminium.

8. A damping device (10) according to Claim 6,
**characterised in that** said support (11) and said plate (12) are made of steel.

9. A damping device (10) according to any one of Claims 1 to 8,
**characterised in that** said elastic centring means (14) is positioned between said disc (13) and said plate (12).

10. A damping device (10) according to any one of Claims 1 to 8,
**characterised in that** said elastic centring means (14) is positioned between said disc (13) and said support (11).

11. A damping device (10) according to any one of Claims 1 to 10,
**characterised in that** said elastic centring means (14) is an elastic recall ring positioned radially about said disc (13).

12. A damping device (10) according to any one of Claims 1 to 11,
**characterised in that** said damping device (10) is adapted to a supercritical shaft (1).

13. A mechanical transmission system (20) comprising:
- a structure (5),
- a shaft (1) rotating about an axis of rotation parallel to a direction (A) relative to said structure (5),
- at least two bearings (21, 22) which are fixed to said structure (5) and guide said shaft (1) in rotation,
**characterised in that** said mechanical transmission system (20) comprises at least one damping device (10) according to any one of Claims 1 to 12.

14. A mechanical transmission system (20) according to Claim 13,
**characterised in that** said shaft (1) is a supercritical shaft.

15. A mechanical transmission system (20) according to any one of Claims 13 to 14,
**characterised in that** said structure (5) is a tail boom (51) of a rotary-wing aircraft (50), said shaft (1) being a transmission shaft which drives a tail rotor (52) of said aircraft (50) in rotation.
